(19) Europäisches Patentamt
European Patent Office
Office européen des brevets

(11) EP 0 477 726 B1

(12) EUROPÄISCHE PATENTSCHRIFT

(45) Veröffentlichungstag und Bekanntmachung des Hinweises auf die Patenterteilung:
**12.03.1997 Patentblatt 1997/11**

(51) Int Cl.[6]: **C08L 69/00**
// (C08L69/00, 67:02, 33:04)

(21) Anmeldenummer: **91115731.1**

(22) Anmeldetag: **17.09.1991**

# (54) Ternäre Polymermischungen

Ternary mixtures of polymers

Mélanges ternaires de polymères

(84) Benannte Vertragsstaaten:
**AT BE CH DE DK ES FR GB IT LI NL SE**

(30) Priorität: **27.09.1990 DE 4030553**

(43) Veröffentlichungstag der Anmeldung:
**01.04.1992 Patentblatt 1992/14**

(73) Patentinhaber: **Röhm GmbH**
**64293 Darmstadt (DE)**

(72) Erfinder:
- **Fischer, Jens-Dieter, Dr.**
  **W-6101 Bickenbach (DE)**
- **Siol, Werner, Dr.**
  **W-6100 Darmstadt-Eberstadt (DE)**

(56) Entgegenhaltungen:
**EP-A- 0 272 425** **EP-A- 0 326 938**
**DE-A- 4 003 088**

- **ENCYCLOPEDIA OF CHEMICAL TECHNOLOGY, 3. Auflage 1982, Band 18, KIRK-OTHMAR "Plant-growth substances to potassium compounds" Seiten 463-466**
- **"Spektroskopische Methoden in der organischen Chemie", M. Hesse, H. Meier, B. Zeeh, Thieme-Verlag, Stuttgart, 1979, Seite 33**

EP 0 477 726 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft verträgliche ternäre Polymermischungen mit Polycarbonat, Polyalkylenterephthalat und Methacrylat-Copolymeren, die sowohl mit Polyestern als auch mit Polycarbonat verträglich sind.

Stand der Technik

Die Schlagzäh-Modifizierung von Kunststoffen vom Typ der Polycarbonate (PC), Polyester (PE) und Polyestercarbonate für die Verwendung als Formmassen, beispielsweise zum Spritzgießen von Gehäuseteilen, Stoßfängern usw. ist seit längerem Stand der Technik (vgl. z.B. US-A 4 906 699). Als besonders wirkungsvoll haben sich Modifizierungsmittel mit Kern-Schale-Aufbau erwiesen.

Für Polyester werden z.B. polymere Kern-Schale-Modifier mit Kernmaterial aus Alkylacrylat und Schalen aus Alkylmethacrylaten bzw. Styrol-Copolymerisaten eingesetzt.

Als Zusatz zu Polycarbonaten verwendet man z.B. Acrylnitril-Butadien-Styrol-Copolymere (ABS), oder Acrylat-Modifier vorzugsweise mit Styrol-Acrylnitril-Copolymerisaten in der äußersten Pfropfschale.

EP-A-0 326 938 beschreibt einen Schlagzähigkeits-Modifier, der aus einem mit Polycarbonat verträglichen Methylmethacrylat-Copolymerisat mit z.B. Phenylmethacrylat als Comonomer auf EPDM gepfropft bestehen kann. Bei unterschiedlichen Brechungsindices von Elastomerphase und kontinuierlicher Phase wirken die Elastomerphasen als Strenteilchen und es resultieren opake Mischungen. Es ist dann bei ternären Mischungen aus Polycarbonat, Polyester und zweiphasigem Mischpolymerisat ein Nachweis etwa vorhandener thermodynamischer Verträglichkeit über die Transparenz der Mischung oder über eine temperaturabhängige Entmischung (LCST-Verhalten) weder sinnvoll noch möglich.

Darüber hinaus befinden sich Blends aus Polycarbonat und Polybutylenterephthalat mit Acrylat-Modifiern auf dem Markt, deren Kern aus Butylacrylat und deren Schale aus Methylmethacrylat bzw. Styrol-Acrylnitril-Copolymerisaten aufgebaut ist.

In der (unveröffentlichten) deutschen Patentanmeldung P 40 03 088.1 werden verträgliche Polymer-Blends aus Polyestern und Polyarylacrylaten vorgeschlagen.

EP-A-0 272 425 berichtet über Polyester-Polycarbonat-Mischungen die als Schlagzähmodifizierungsmittel ein Zweiphasen-Interpolymer enthalten. Wie die Experimente ausweisen werden hier aber keine thermodynamisch verträglichen transparenten Polymermischungen zur Verfügung gestellt.

Gegenstand der EP-A 0 297 285 sind transparente, thermoplastisch verarbeitbare Polymermischungen aus einerseits Polycarbonaten und aus Methacrylat-Copolymerisaten andererseits, die aus 95 - 5 Gew.-% Methylmethacrylat und 5 - 95 Gew.-% Acryl- bzw. Methacrylestern mit cyclischen Gruppen im Esterrest bestehen.

Aufgabe und Lösung

Die Erfahrungen der Technik mit Mischungen unter sich verschiedener Polymerer wurden schon relativ früh in dem Satz zusammengefaßt: "Miscibility is the exception, immiscibility is the rule" (vgl. Kirk-Othmer, Encyclopedia of Chemical Technology 3rd ED. Vol. 18, pg. 460, J. Wiley 1982). Trotz einer wachsenden Zahl von Gegenbeispielen, die in den letzten Jahren aufgefunden wurden, bestimmt dieser Erfahrungssatz auch heute noch die Erwartungen des Fachmanns.

Nicht von ungefähr hat sich das Interesse an verträglichen Polymermischungen in letzter Zeit verstärkt. Verträgliche Polymermischungen haben in der Regel den Vorteil der Transparenz; sie sind - soweit sie aus Thermoplasten aufgebaut sind - meist selbst sehr gut thermoplastisch verarbeitbar und sie eröffnen öfter neue Möglichkeiten der Wiederverwertbarkeit.

Aus der einheitlichen Zusammensetzung leiten sich in der Regel auch unter allen praktischen Gesichtspunkten reproduzierbar einstellbare, im allgemeinen durchaus befriedigende mechanische Eigenschaften ab. Die Aussicht, technisch brauchbare, verträgliche Polymermischungen zu erhalten, mußte eher noch ungünstiger beurteilt werden, wenn es sich um **ternäre** Mischungssysteme handelt.

Es wurde nun gefunden, daß überraschenderweise bestimmte ternäre Mischungen aus thermoploastischen Polymeren verträgliche transparente Polymerlegierungen PL bilden. Diese Polymerlegierungen PL sind aufgebaut aus den Komponenten :

A.) 0,1 - 99,9 Gew.-%, vorzugsweise 50 bis 95 Gew.-%, einer Polyester-Polycarbonat-Mischung bestehend aus

a.1) 0,1 - 99,9 Gew.-T., vorzugsweise 10 bis 50 Gew.-T., eines Polyesters und
a.2) 99,9 - 0,1 Gew.-T., vorzugsweise 90 bis 50 Gew.-T., eines Polycarbonats und

B.) 99,9 - 0,1 Gew.-%, vorzugsweise 5 bis 50 Gew.-%, eines Poly(meth)acrylats PA enthaltend 20 - 100 Gew.-%, vorzugsweise 50 bis 95 Gew.-%;
mindestens eines Monomeren der Formel I

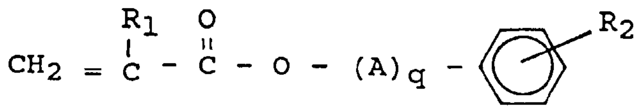 (I)

worin $R_1$ für Wasserstoff oder Methyl,

$R_2$ für einen Alkylrest mit 1 - 6 Kohlenstoffatomen oder einen Rest $-(CH_2)_n-QR_3$ worin n für null oder eine Zahl von 2 -6 und Q für Sauerstoff oder einen Rest $-NR_4$ steht, wobei $R_3$ und $R_4$ unabhängig voneinander Wasserstoff oder einen Alkylrest mit 1 bis 4 Kohlenstoffatomen bedeuten und

A für eine Alkylidengruppe mit 1 - 4 Kohlenstoffatomen oder eine Gruppe $-(CH_2)_m-O-$, worin m eine Zahl von 2 bis 6 und q null oder 1 bedeutet, steht,

und daß die Komponenten A) und B) verträglich sind (Die einzelnen Anteilsgruppen ergänzen sich gewichtsmäßig jeweils zu 100 Gew.-%.)

Unter "Polyestern" im Sinne der vorliegenden Erfindung seien - wie üblich - die Polykondensationsprodukte von Hydroxycarbonsäuren oder von mehrwertigen Alkoholen (Diolen oder Polyolen) mit mehrbasischen Carbonsäuren (Dicarbonsäuren, Polycarbonsäuren) verstanden. (Vgl. Kirk-Othmer, Encyclopedia of Chemical Technology 3rd Ed., Vol. 18, pg. 549 - 594, J. Wiley 1982.) Sie gehorchen der allgemeinen Formel II

$$-\!\left(O - R - CO\right)\!-_m \qquad \text{(II)}$$

worin

R für einen geeigneten Kohlenwasserstoffrest steht

oder vorzugsweise der Formel II-A

$$-\!\!\left[O - R' - O - \underset{\underset{O}{\|}}{C} - R'' - \underset{\underset{O}{\|}}{C}\right]\!-_r \qquad \text{(II-A)}$$

worin

R' für einen gegebenenfalls cyclischen Alkylenrest mit 2 - 8 Kohlenstoffatomen und
R" für einen Arylrest, insbesondere einen Phenyl- oder einen Naphthylrest steht und
m bzw. r in II und II-A eine Zahl bedeutet, welche einem Molgewicht des Polymeren im Bereich $> 10 \times 10^3$ bis $200 \times 10^3$ Dalton entspricht. Die Bestimmung der Molgewichte geschieht in der Regel über die Lösungsviskosität $\eta_{sp}/C$ [in cm/g] gemessen mittels Kapillarviskosimeter.

Insbesondere gehorchen die Polyester der Formel II-A'

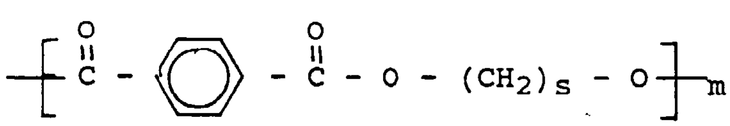 (II-A')

worin s für eine Zahl von 2 - 6 steht und m die oben bezeichnete Bedeutung besitzt. Die Endabsättigungen der Polymeren entsprechen den üblicherweise z.B. in Handelsprodukten vorhandenen.

Von besonderem technischem Interesse sind die Polyester der Formel II-A', bei denen s für 2, 4 oder 6 steht und speziell die Polymeren, bei denen s für 2 steht (Polyethylenterephthalat, PET) und bei denen s für 4 steht (Polybutylenterephthalat, PBT).

In der Regel enthalten die Polyester auf Terephthalsäurebasis weniger als 10 Gew.-% an Iso-Phthalsäure.

Betont werden soll, daß es sich bei den anzuwendenden Polyestern im allgemeinen um kommerziell zugängliche Produkte handelt, die gegebenenfalls noch an sich bekannte Zusätze wie z.B. Nukleierungsmittel, Pigmente, Flammschutzmittel u.ä. enthalten können.

Unter "Polycarbonat" (PC nach DIN 7728 T1) seien wie üblich die formalen Polykondensationsprodukte aus Diolen, insbesondere 4,4'-Dihydroxydiphenylalkanen ("Bisphenol"), mit Kohlensäure verstanden. Ihr mittleres Molekulargewicht Mw (Gewichtsmittel) liegt in der Regel im Bereich 20.000 - 60.000 Dalton. (Vgl. Kirk-Othmer Encycl. of Chemical Technology 3rd Ed, Vol. 6, S. 106 bis 116, J. Wiley 1982, H.Schnell, Chemistry & Physics of Polycarbonates.)
Sie können in der Regel durch die Formel III

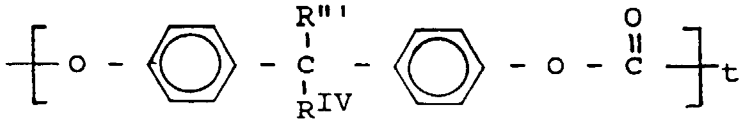

worin R''' und $R^{IV}$ unabhängig voneinander für Wasserstoff, einen gegebenenfalls verzweigten Alkylrest oder einen Arylrest mit 6 - 12 Kohlenstoffatomen stehen und t eine Zahl bedeutet, welche einem Molgewicht Mw des Polymeren im Bereich $2 \times 10^4$ - $6 \times 10^4$ Dalton entspricht, dargestellt werden.

Die dynamische Glasübergangstemperatur Tg (dyn) liegt in der Regel bei ca. 160 Grad C (vgl. Kunststoff-Handbuch, Bd. IX, S. 310, Carl Hanser Verlag, Kirk-Othmer 3rd Ed., Vol. 18, S. 479 - 497, J. Wiley, 1982). Die Herstellung der Polycarbonate wird z.B. in der US-A 1 999 835 bzw. der GB-A 772 627 beschrieben.

Die Herstellung der Homo- bzw. Copolymerisate PA erfolgt nach bekannten Verfahren. (Vgl. H. Rauch-Puntigam, Th. Völker, Acryl- und Methacrylverbindungen, Springer-Verlag, 1967). Wenn auch eine Herstellung durch anionische Polymerisation oder Group-Transfer-Polymerisation (siehe auch O.W. Webster et al., J.Am. Chem. Soc., 105, 5706 (1983)) möglich ist, so ist doch die bevorzugte Herstellungsform die radikalische Polymerisation. Dabei kann sowohl Substanz- als Lösungs- oder Emulsionspolymerisation durchgeführt werden.

Die für die Herstellung des Polymeren PA in Frage kommenden Monomeren sind an sich bekannt:

Genannt seien als Monomere der Formel I das Phenyl(meth)acrylat und dessen Alkyl-, Alkoxy- und Alkylamin-substituierte Derivate mit 1 - 6 Kohlenstoffatomen in den Alkylresten, insbesondere das p-Methoxyphenyl-(meth)acrylat. Ferner die N,N-Dialkylaminosubstituierten Phenyl-(meth)-acrylate, so z.B. das p-N,N-Dimethylaminophenylmethacrylat. Von Interesse sind aber auch die nicht direkt mit der (Meth)acryloylgruppe verbundenen (Alkyloxy)phenylmethacrylate, s. z.B. das Phenoxyethylmethacrylat (A = $-CH_2-CH_2-O-$). Besonders hervorzuheben sind jedoch Alkoxyphenyl(meth)acrylate, insbesondere Methoxyphenyl- und das Phenylmethacrylat.

Die Polyaryl(meth)acrylate können auch aus mehreren Arten von Monomeren, vorzugsweise solchen der Formel I aufgebaut sein. Sofern die Polymeren PA nicht ausschließlich aus Monomeren der Formel I aufgebaut sind, kommen als Comonomere sonstige Ester der (Meth)acrylsäure, insbesondere solche der Formel IV

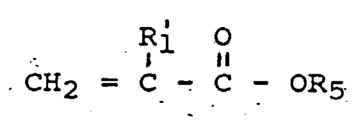

(IV)

worin $R_1'$ für Wasserstoff oder Methyl, $R_5$ für einen aliphatischen Rest mit 1 bis 12 Kohlenstoffatomen oder für einen mit mindestens einem Rest X substituierten Alkylrest mit 2 bis 8 Kohlenstoffatomen, wobei X für eine -OH, $-OR_6$ oder eine $NR_7R_8$-Gruppe steht, wobei $R_6$ für einen Alkylrest mit 1 bis 6 Kohlenstoffatomen oder einen Alkoxyrest mit 1 bis 6 Kohlenstoffatomen und $R_7$ für Wasserstoff oder einen Alkylrest mit 1 bis 6 Kohlenstoffatomen und $R_8$ für einen Alkylrest mit 1 bis 6 Kohlenstoffatomen steht oder worin $R_7$ und $R_8$ gegebenenfalls unter Einbeziehung eines weiteren Stickstoffs oder eines Sauerstoffs einen fünf- oder sechsgliedrigen, vorzugsweise gesättigten Ring bilden, oder Styrol, p- oder α-Methylstyrol.

Bei den radikalischen Polymerisationsverfahren finden vorzugsweise die üblichen radikalischen Initiatoren, beispielsweise peroxidische, insbesondere organische Peroxiverbindungen oder Azoverbindungen in Mengen von 0,01

bis 1 Gew.-% (bezogen auf die Monomeren) Anwendung. Als Regler können z.B. die üblichen Schwefelregler in den bewährten Konzentrationen z.B. in Mengen von 0,01 bis 2 Gew.-% (bezogen auf die Monomeren) angewendet werden.

Die Molgewichte Mw der Polymerisate PA liegen in der Regel oberhalb von 3 000 im allgemeinen im Bereich von 10 000 bis 2 000 000 Dalton vorzugsweise 20 000 bis 300 000 Dalton (Bestimmung durch Lichtstreuung) [vgl. H.F. Mark et al. Encyclopedia of Polymer Science & Engineering, 2nd Ed. Vol. 10, pg. 1 - 19, J. Wiley 1987]. Bei der Auswahl der Monomerkomponenten, die als Comonomere bei PA eingesetzt werden sollen, ist darauf zu achten, daß die Glastemperatur Tg des resultierenden Polymerisats die technische Anwendbarkeit des Gesamtsystems PL nicht einschränkend beeinflußt.

Eine weitere, vorteilhafte Ausgestaltung der vorliegenden Erfindung stellen Polymermischungen PL' dar, welche aufgebaut sind aus

5 - 95 Gew.-% der Komponente A) wie oben für die Polymerlegierungen PL beschrieben und

C.) 95 - 5 Gew.-% eines Schlagzäh-Modifizierungsmittels PC, das ein mindestens zweiphasiges Mischpolymerisat aufgebaut aus

c.1) 20 - 90 Gew.-Teilen. eines gegebenenfalls vernetzten Polymeren PB, welches ein Elastomer mit einer Glastemperatur Tg ≤ 10 Grad C, vorzugsweise ≤ -10 Grad C und

c.2) 80 - 10 Gew.-Teilen PA, wobei PB und PA wenigstens teilweise (im allgemeinen zu wenigstens 5 Gew.-%) Kovalent miteinander verknüpft sind.

Eine weitere vorteilhafte Ausgestaltung der vorliegenden Erfindung stellt ein Copolymerisat PD dar, aufgebaut aus

d.1) 99 - 50 Gew.-% eines Polymerisats aus Monomeren (I) wie unter B) oben beschrieben, und

d.2) 1 - 50 Gew.-% eines Comonomeren mit UV-absorbierenden Gruppen und/oder eines Gemisches aus

d.3) 99 - 50 Gew.-% eines Polymerisats aus Monomeren (I) wie unter B) oben beschrieben und

d.4) 1 - 50 Gew.-% eines niedermolekularen UV-Absorbers

das in Deckschichten auf die Polyester-Polycarbonat-Mischungen gemäß A) zur Stabilisierung gegen UV-Licht aufgebracht wird.

Das Schlagzähmodifizierungsmittel PC ein Polymermischungen PL' stellt definitionsgemäß ein zweiphasiges Mischpolymerisat dar, dessen Komponente PA' unter C.2) analog den vorstehend beschriebenen Polymeren PA hergestellt werden kann.

Die Komponente PB ist im allgemeinen vernetzt und stellt eine an sich bekannte Gummiphase, vorzugsweise im Molekulargewichtsbereich Mw von $10^4$ bis $10^7$ Dalton dar. (Vgl. z.B. B. Vollmert, Grundriß der makromolekularen Chemie, Bd. IV, S. 129 ff., E. Vollmert-Verlag, Karlsruhe, 1982) PB ist demnach beispielsweise Polybutadien, Polyisopren oder ein anderes Polyolefin, z.B. EPDM oder ein Polyacrylat, z.B. Polyethyl-, Polybutyl- oder Poly-2-ethylhexylacrylat. In einem besonders bevorzugten Fall wird von einem Kern-Schale-Latex ausgegangen, wobei der Latex-Kern (Durchmesser 100 - 500 nm) aus den Elastomeren, z.B. vernetztem Polybutadien oder vernetztem Polybutylacrylat besteht. Auf diesen Kern ist eine Schale aus Polyarylacrylat aufgepfropft. (Zur Pfropfpolymerisation vgl. Houben-Weyl, Methoden der org. Chemie E20, Teil 1 S. 626f, Georg-Thieme-Verlag 1987.)

Derartige Kern-Schale-Latices können nach Entfernen des Wassers z.B. durch Sprühtrocknung als Schlagzähmodifier für die Komponente A) eingesetzt werden. Dabei wird das Elastomere (z.B. das Polybutylacrylat) über das Polyacrylat PA' an die Komponente A) gebunden. Derartige Polymermischungen lassen sich sehr gut verarbeiten und verbessern insbesondere die Kerbschlagzähigkeit der Komponente A).

Das Copolymerisat PD ist definitionsgemäß aufgebaut aus den Monomeren I und Comonomeren mit UV-absorbierenden Gruppen nach d2), wie sie aus der US-A 4 576 870 und der EP-A 0 368 094 bekannt sind. Die Copolymerisate PD besitzen im allgemeinen ein Molekulargewicht Mw im Bereich 5 000 bis 5 x $10^6$ Dalton. Als polymerisierbare UV-Absorber seien beispielhaft genannt 2-(2'-Hydroxyphenyl)-5-methacrylamido-benzotriazol oder 2-Hydroxy-4-methacryloxybenzophenon. (Vgl. auch Houben-Weyl, 4. Aufl., Bd. 15, S. 256 - 260, Verlag Chemie.)

Auch die niedermolekularen UV-Absorber nach d.4) sind an sich bekannt. So lassen sich die polymerisierbaren Verbindungen nach d.2) auch in ihrer monomeren Form als niedermolekulare, lösliche UV-Absorber in den Copolymerisaten PD vorteilhaft einsetzen. Weitere UV-Absorber mit einem Molekulargewicht $M_w$<5000 Dalton sind 2-Hydroxy-4-n-octoxybenzophenon, 2-Hydroxy-4-methoxybenzophenon, 2-(2'-Hydroxy-5'-methylphenyl)benztriazol und andere Abkömmlinge des 2-Hydroxy-benzophenons oder Benzotriazols, ferner 2,4-Dihydroxy-benzoylfuran, Salicylsäurephenylester, Resorcindisalicylat, Resorcinmono- und di-benzoat, Benzylbenzoat, Stilben, β-Methylumbelliferon und dessen Benzoat. Zahlreiche weitere UV-Absorber sind bekannt und im Handel erhältlich. Besonders bevorzugt sind UV-Absorber von geringer Flüchtigkeit bei der Verarbeitungstemperatur, d.h. besonders solche mit möglichst hohem Molekulargewicht. Der UV-Absorber soll in der gewählten Konzentration in den Polymeren möglichst homogen verteilt sein.

Die Charakterisierung der erfindungsgemäßen Polymermischungen PL als verträgliche Mischungen erfolgt nach den anerkannten Kriterien (vgl. Krik-Othmer, loc.cit. pp. 457 - 460, Vol. 18; Brandrup-Immergut, Polymer Handbook, 2nd Ed. Wiley Interscience III-211, 1975).

i) Bei Anwendung optischer Verfahren beobachtet man bei den erfindungsgemäßen Polymermischungen PL einen einzigen Brechungsindex, der zwischen denen der beiden Polymerkomponenten A) und B) liegt.

ii) Die Polymermischungen PL besitzen eine einzige Glasübergangstemperatur Tg (die zwischen der der Polymerkomponenten liegt).

Als ein anderer Test auf die Mischbarkeit von Polymeren wird das Auftreten der **Lower Critical Solution Temperature** (LCST) herangezogen. Die Existenz des LCST beruht auf dem Vorgang, daß sich beim Erwärmen die bis anhin klare Mischung in Phasen auftrennt und optisch trübe wird. Dieses Verfahren stellt einen eindeutigen Beweis dafür dar, daß die ursprüngliche Polymermischung aus einer einzigen, im Gleichgewicht befindlichen homogenen Phase bestand.

Ferner können Polymermischungen das Phänomen der **Upper Critical Solution Temperature** (UCST) zeigen. Umgekehrt wie beim Vorliegen der LCST zeigen solche Polymermischungen bei erhöhter Temperatur Verträglichkeit (Einphasigkeit), bei niederer Temperatur Unverträglichkeit (Phasentrennung) (vgl. O. Olabisi, L.M. Robeson, M.T. Shaw, Polymer-Polymer-Miscibility, Academic Press 1979; Kirk-Othmer, loc.cit, pp. 457 - 460; deutsche Patentanmeldung DE-A 37 08 428.3). Bei den vorliegenden Polymermischungen PL tritt bevorzugt das Phänomen der LCST auf.

Herstellung der Mischungen PL

Die verträglichen Mischungen PL können durch die unterschiedlichen Verfahren hergestellt werden; sie werden z.B. durch intensives mechanisches Vermischen der Komponenten A) und B) in der Schmelze, im Extruder usw. erzeugt; oder sie können auch aus einem gemeinsamen Lösungsmittel heraus als sogenannte "solution cast polyblends" hergestellt werden (vgl. Kirk-Othmer "Encyclopedia of Chemical Technology" 3rd. Ed. Vol. 18, pg. 443 - 478, J. Wiley, 1982). Auch kann so vorgegangen werden, daß Polymer A) in der Monomermischung des anderen Polymeren B) aufgelöst wird und anschließend in Gegenwart von Polymer A) erzeugt wird. Ebenso kann die Polymermischung PL aus gemeinsamen Fällungsmitteln erzeugt werden. Der Mischungsart sind keine Grenzen gesetzt. Man erzeugt in der Regel zunächst Mischungen der Komponenten A) und B), wobei vorteilhaft von Feststoffen in Form beispielsweise eines Perlpolymerisats oder eines Granulats ausgegangen wird unter Verwendung langsam laufender Mischaggregate wie z.B. Trommel-, Rhönrad-, Doppelkammer-Pflugscharmischern. Die langsam laufenden Mischaggregate verursachen ein mechanisches Mischen, ohne daß die Phasengrenzen aufgehoben werden (vgl. Ullmanns Encyclopädie der Technischen Chemie, 4. Auflage, Bd. 2, pg. 282 - 311, Verlag Chemie). Anschließend erfolgt die thermoplastische Aufbereitung durch homogenes Mischen in der Schmelze unter Verwendung von heizbaren Mischaggregaten bei den dafür geeigneten Temperaturen z.B. 150 bis ca. 300 Grad C in Knetern oder vorzugsweise Extrudern, z.B. Ein- oder Mehrschneckenextrudern oder gegebenenfalls in Extrudern mit oszillierender Schnecke und Scherstiften (z.B. im BUSSCO-Kneter). Man kann nach diesen Verfahren Gleichkorngranulate (z.B. Heißabschlag, Würfelform, Rundkorn) herstellen. Die Korngröße der Granulate liegt dabei im Bereich 2 bis 5 mm.

Vorteilhafte Wirkungen

Die erfindungsgemäßen ternären Polymerlegierungen PL können bereits aufgrund ihrer Verträglichkeit das Interesse der Technik beanspruchen. Die erfindungsgemäßen Polymermischungen sind gewöhnlich glasklar transparent. Offenbar gelingt es, durch das Zulegieren von Homopolymeren oder Copolymeren der Monomeren der Formel I mit Anteilen > 20 Gew.-% in Mischungen aus teilkristallinen Polyestern und Polycarbonaten den Kristallinitätsgrad der Polyester deutlich zu reduzieren. Dieser Umstand wirkt sich sowohl auf die Transparenz als auch auf die mechanischen Eigenschaften der gut fließfähigen Polycarbonat-Polyester-Kompositionen günstig aus.

Eine weitere interessante Anwendungsmöglichkeit eröffnet die Modifizierung der Tieftemperatur-Kerbschlagzähigkeit von Polycarbonat-Polyester-Mischungen über Zähphasen (Polymermischungen PL') die vorzugsweise aus vernetzten Elastomeren, auf die eine verträgliche Hartphase PA' gepfropft ist, die der Zusammensetzung nach dem Polymeren PA entspricht. Weiter ist die erfindungsgemäß sich eröffnende Möglichkeit technisch bedeutsam, Polymerisate

aus den Monomeren der Formel I mit einpolymerisierten UV-Absorbern oder mit einem Gehalt an statistisch verteilten niedermolekularen UV-Absorbern als Deckschichten für die UV-labilen Polycarbonat-Polyester-Blends nach A) einzusetzen.

Die nachfolgenden Beispiele dienen zur Erläuterung der Erfindung. Falls nicht anders vermerkt, wurde als Polycarbonat-Komponente das Produkt ®MAKROLON 3100 der Bayer AG, als Polyester-Komponente das Polybutylenterephthalat VESTODUR 1000 der Hüls AG mit einem Kristallitanteil von 30 % verwendet.

Die Verträglichkeit wird durch Bestimmung der LCST nachgewiesen (vgl. D.R. Paul, Polymer Blends & Mixtures, Seite 1 - 3, Martinus Nijhoff Publishers, Dosdrecht, Boston 1985). Experimentell wird dazu der Trübungspunkt $T_{TR}$ (Trübungstemperatur) bestimmt, z.B. auf der Kofler-Heizbank (vgl. Chem. Ing.-Technik S. 289 (1950).

## BEISPIELE

Beispiel 1

80 Gew.-% Polycarbonat wurden im Mischextruder mit 10 Gew.-% Polybutylenterephthalat und 10 Gew.-% Copolymerisat aus 50 Teilen Methylmethacrylat und 50 Teilen Phenylmethacrylat gemischt. Es resultiert eine klare Schmelze und ein klares, amorphes Blend mit einem Trübungspunkt (LCST) von ca. 170 Grad C.

Beispiel 2

80 Gew.-% Polycarbonat wurden analog Beispiel 1 mit 10 Gew.-% Polybutylenterephthalat 1000 und 10 Gew.-% Polyphenylmethacrylat gemischt. Schmelze und Blend sind wiederum klar, wobei das Blend eine LCST von ca. 180 Grad C aufweist.

Beispiel 3

80 Gew.-% Polycarbonat wurden mit 10 Gew.-% Polybutylenterephthalat und 10 Gew.-% Copolymerisat aus 50 Teilen p-Methoxy-Phenylmethacrylat und 50 Teilen Methylmethacrylat gemischt. Das transparente Blend weist eine LCST von ca. 180 Grad C auf.

Beispiel 4

70 Gew.-% Polycarbonat wurden mit 20 Gew.-% Polybutylenterephthalat und 10 Gew.-% Polyphenylmethacrylat gemischt. Das extrudierte Blend ist transparent bis transluzent und weist eine LCST von ca. 140 bis 150 Grad C auf.

Beispiel 5

60 Gew.-% Polycarbonat wurden mit 20 Gew.-% Polybutylenterephthalat und 20 Gew.-% Copolymerisat aus 50 Teilen Phenylmethacrylat und 50 Teilen Methylmethacrylat gemischt. Die Schmelze ist klar, das extrudierte Blend ist transluzent und weist eine LCST von ca. 140 Grad C auf.

Vergleichsbeispiel 6

90 Gew.-% Polycarbonat wurden gemäß Beispiel 1 mit 10 Gew.-% Polybutylenterephthalat abgemischt. Das resultierende Blend ist transluzent. Eine Entmischung, die eine Verträglichkeit kennzeichnet (LCST), kann nicht nachgewiesen werden.

Vergleichsbeispiel 7

80 Gew.-% Polycarbonat wurden mit 20 Gew.-% Polybutylenterephthalat abgemischt. Das resultierende Blend ist transluzent bis opak. Wiederum konnte keine Entmischung des Blends festgestellt werden.

Beispiel 8

65 Gew.-% Polycarbonat wurden mit 20 Gew.-% Polybutylenterephthalat und 15 Gew.-% eines Pfropf-Copolymerisats aus EPDM und Methylmethacrylat-Phenylmethacrylat (im Gewichtsverhältnis 33 : 34 : 33) analog Beispiel 1 abgemischt. Das resultierende Blend ist zwar opak (aufgrund der Brechungsindex-Differenz zwischen der Elastomer- und der Matrixphase), zeigt aber hohen Glanz (Hinweis auf Verträglichkeit zwischen Pfropfast und Matrixphase und

damit auf gute Anbindung der Elastomerphase) und eine sehr gute Zähigkeit im Biegeversuch.

Beispiel 9

Herstellung eines Kern-Schale-Modifizierungsmittels per Emulsionspolymerisation

In einem 71-Reaktionsgefäß (Witt'scher Topf) wird eine Emulsion aus 2925 g $H_2O$, 1940 g Butylacrylat, 9,75 g Allylmethacrylat, 5 g C15-Paraffinsulfonat-Natriumsalz und 0,004 g $FeSO_4$ hergestellt, auf 40 Grad C erhitzt und mit 1,9 g $K_2S_2O_8$ / 1,4 g $Na_2S_2O_5$ zur Reaktion gebracht.

Nach 45 min wird auf 80 Grad C erhitzt und während 2 Stunden eine Emulsion, bestehend aus 325 g Methylmethacrylat, 318,5 g Phenylmethacrylat, 6,5 g Methylacrylat und 3,9 g 2-Ethylhexylthioglykolat in 975 g $H_2O$, 2 g C15-Paraffinsulfonat-Natriumsalz und 1 g $K_2S_2O_8$, zugetropft. Zur Endpolymerisation wird die so erhaltene Dispersion 1 Stunde bei 80 Grad C gehalten. Der Feststoff-Gehalt beträgt 40 Gew.-% und wird per Gefrierkoagulation isoliert.

Der Kern-Radius wurde zu 64 nm, der Schalenradius zu 74 nm bestimmt. Das Comonomerverhältnis in der Hartphase (Schale) beträgt Methylmethacrylat : Phenylmethacrylat : Methylacrylat = 50 : 49 : 1 Gew.-%.

Beispiel 10

66,7 Gew.-% Polycarbonat wurden mit 20 Gew.-% Polybutylenterephthalat und 13,3 Gew.-% eines Kern-Schale-Modifizierungsmittels gemäß Beispiel 9 abgemischt. Das resultierende Blend weist folgende Eigenschaften auf:

| | |
|---|---|
| Eigenschaft<br>VST-B [Grad C]:<br>(DIN 53461) | 118 |
| Kerbschlagzähigkeit<br>ISO 180/1A [$KJm^{-2}$]<br>(DIN 53453) 23 Grad C<br>-20 Grad C | 58 (Teilbruch)<br>20 |
| E-Modul [mPA]<br>(DIN 53457) | 2190 |
| Reißdehnung [%]<br>DIN 53455) | 165 |
| Schmelzviskosität [Pa.s]<br>260 Grad C/5N | 375 |

**Patentansprüche**

**1.** Ternäre Polymerlegierungen aus thermoplastischen Polymeren,
bestehend aus

A.) 0,1 - 99,9 Gew.-% einer Polyester-Polycarbonat-Mischung bestehend aus

a.1) 0,1 - 99,9 Gew.-Teilen eines Polyesters und

a.2) 99,9 - 0,1 Gew.-Teilen eines Polycarbonats und

B.) 99,9 - 0,1 Gew.-% eines Poly(meth) acrylsäureesters PA dadurch gekennzeichnet, daß PA aus 20 - 100 Gew.-% mindestens eines Monomeren der Formel I

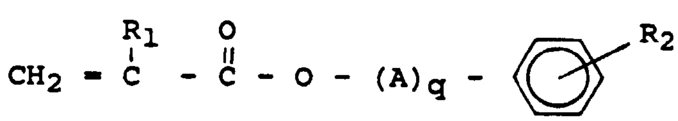

(I)

aufgebaut ist,
worin

$R_1$ für Wasserstoff oder Methyl,

$R_2$ für einen Alkylrest mit 1 - 6 Kohlenstoffatomen oder einen Rest $-(CH_2)_n-QR_3$, worin n für 0 oder eine Zahl von 2 - 6 und Q für Sauerstoff oder für einen Rest $-N-R_4$ steht, wobei $R_3$ und $R_4$ unabhängig voneinander Wasserstoff oder einen Alkylrest mit 1 - 4 Kohlenstoffatomen bedeuten und

A für eine Alkylidengruppe mit 1 - 4 Kohlenstoffatomen oder eine Gruppe $-(CH_2)_m-O-$, worin m eine Zahl von 2 bis 6 bedeutet und

q für null oder 1 steht, enthält und daß die Komponenten A) und B) verträglich sind.

**2.** Polymerlegierungen, die die Komponente A.) gemäß Anspruch 1 zu 5 - 95 Gew.-% enthalten, dadurch gekennzeichnet, daß sie 95 - 5 Gew.-% einer Komponente C als Schlagzähmodifizierungsmittels PC enthalten, welche ein mindestens zweiphasiges Mischpolymerisat, aufgebaut aus

c.1) 20 - 90 Gew.-Teilen eines Polymeren PB, welches ein Elastomer mit einer Glasübergangstemperatur $T_g$ < 10 Grad C ist und

c.2) 80 - 10 Gew.-Teilen PA,

wobei die Polymere PB und PA kovalent miteinander verkümpft sind, enthält.

**3.** Polymerlegierungen gemäß Anspruch 2, dadurch gekennzeichnet, daß das Schlagzähmodifizierungsmittel PC vernetzt ist.

**4.** Polymerlegierungen gemäß den Ansprüchen 2 und 3, dadurch gekennzeichnet, daß das Polymer PB eine Glasübergangstemperatur $T_g$ < -10 Grad C besitzt.

**5.** Polymerlegierungen, aufgebaut aus den Komponenten

A.) gemäß Anspruch 1
und

D.) 99,9 bis 0,1 Gew.-% eines Copolymerisats, bestehend aus

d1.) 99 bis 50 Gew.-Teilen Monomereinheiten gemäß Formel I in Anspruch 1 und
d2.) 1 bis 50 Gew.-Teilen eines Comonomeren mit UV-absorbierenden Einheiten und/oder eines Gemisches bestehend aus:
d3.) 99 bis 50 Gew.-Teilen eines Polymerisats aus Monomereinheiten gemäß Formel I in Anspruch 1 und
d4.) 1 bis 50 Gew.-Teilen eines niedermolekularen UV-Absorbers,

wobei das Copolymerisat D auch als Deckschicht auf Polymermischungen A zum Schutz gegen UV-Strahlung aufgebracht sein kann.

## Claims

**1.** Ternary polymer mixtures of thermoplastic polymers, comprising

A.) 0.1 - 99.9 wt.% of a polyester-polycarbonate mixture comprising

a.1) 0.1 - 99.9 parts by weight of a polyester and

a.2) 99.9 - 0.1 parts by weight of a polycarbonate and

B.) 99.9 - 0.1 wt.% of a poly(meth)acrylic acid ester PA,

characterised in that the PA is synthesised from 20 - 100 wt.% of at least one monomer of formula I

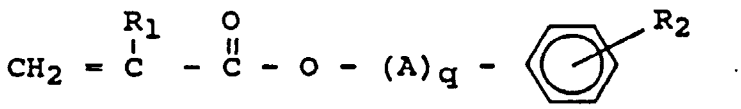 (I)

wherein

$R_1$ is hydrogen or methyl,
$R_2$ is an alkyl group having 1 to 6 carbon atoms or a group $-(CH_2)_n-QR_3$, wherein n is 0 or an integer of 2 - 6 and Q is oxygen or a group $-N-R_4$, whilst $R_3$ and $R_4$ independently of one another are hydrogen or an alkyl group having 1 to 4 carbon atoms, and
A is an alkylidene group having 1 to 4 carbon atoms or a group $-(CH_2)_m-O-$, wherein m is an integer of 2 to 6, and
q is zero or 1, and

wherein the components A) and B) are compatible.

**2.** Polymer mixtures comprising 5 to 95 wt.% of the component A.) according to claim 1, characterised in that they comprise
95 - 5 wt.% of a component C as an impact resistance modifier PC which comprises an at least two-phase copolymer synthesised from

c.1) 20 - 90 parts by weight of a polymer PB, which is an elastomer with a glass transition temperature Tg < 10°C and

c.2) 80 - 10 parts by weight of PA,

wherein the polymers PB and PA are covalently bonded with one another.

**3.** Polymer mixtures according to claim 2, characterised in that the impact resistance modifier PC is crosslinked.

**4.** Polymer mixtures according to claims 2 and 3, characterised in that the polymer PB has a glass transition temperature Tg < -10°C.

**5.** Polymer mixtures synthesised from the components

A.) according to claim 1 and
D.) 99.9 to 0.1 wt.% of a copolymer comprising

d1.) 99 to 50 parts by weight of monomer units according to formula I in claim 1 and
d2.) 1 to 50 parts by weight of a comonomer with ultraviolet-absorbing units and/or a mixture comprising
d3.) 99 to 50 parts by weight of a polymer comprising monomer units according to formula I in claim 1 and
d4.) 1 to 50 parts by weight of a low-molecular weight ultraviolet absorber,

wherein the copolymer D may also be applied as a cover layer onto the polymer mixtures A to act as protection against ultraviolet irradiation.

**Revendications**

**1.** Alliages ternaires de polymères thermoplastiques, se composant de

A) 0,1 à 99,9% en poids d'un mélange polyester/polycarbonate composé de

a1) 0,1 à 99,9 parties en poids d'un polyester et
a2) 99,9 à 0,1 parties en poids d'un polycarbonate et

B) 99,9 à 0,1% en poids d'un polyester d'acide (méth)acrylique PA,

caractérisé en ce que PA est constitué par 20 à 100% en poids d'au moins un monomère de formule I

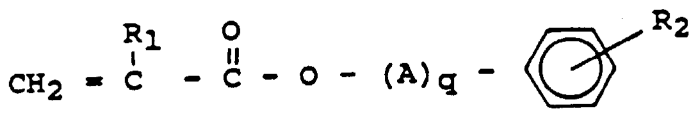

(I)

dans laquelle

$R_1$ est mis pour un atome d'hydrogène ou un reste méthyle,
$R_2$ est mis pour un reste alkyle à 1-6 atomes de carbone ou un reste $-(CH_2)_n-QR_3$, ou n est mis pour 0 ou pour un nombre de 2 à 6 et Q pour un atome d'oxygène ou pour un reste $-N-R_4$, $R_3$ et $R_4$ représentant chacun, indépendamment l'un de l'autre, un atome d'hydrogène ou un reste alkyle à 1-4 atomes de carbone,
A est mis pour un groupement alkylidène à 1-4 atomes de carbone ou pour un groupement $-(CH_2)_m-O-$, m étant un nombre de 2 à 6 et
q est mis pour 0 ou 1,

et en ce que les composants A) et B) sont compatibles.

**2.** Alliages de polymères contenant le composant A) selon la revendication 1, à raison de 5 à 95% en poids, caractérisés en ce qu'ils contiennent
95 à 5% en poids d'un composant C) en tant qu'agent modifiant la résilience PC, qui contient un copolymère à deux phases au moins, composé de

c1) 20 à 90 parties en poids d'un polymère PB qui est un élastomère ayant une température de transition vitreuse $Tg < 10°C$ et
c2) 80 à 10 parties en poids de PA,

les polymères PB et PA étant reliés par des liaisons covalentes.

**3.** Alliages de polymères selon la revendication 2, caractérisés en ce que l'agent modifiant la résilience PC est réticulé.

**4.** Alliages de polymères selon la revendication 2 ou 3, caractérisés en ce que le polymère PB a une température de transition vitreuse $Tg < -10°C$.

**5.** Alliages de polymères, constitués par les composants

A) selon la revendication 1 et
D) 99,9 à 0,1% en poids d'un copolymère se composant de

d1) 99 à 50 parties en poids de motifs monomères selon la formule I dans la revendication 1
d2) 1 à 50 parties en poids d'un comonomère renfermant des motifs absorbant l'UV et/ou d'un mélange composé de
d3) 99 à 50 parties en poids d'un polymère de motifs monomères selon la formule I dans la revendication 1 et
d4) 1 à 50 parties en poids d'une substance absorbant l'UV de bas poids moléculaire,

le copolymère D) pouvant aussi être appliqué comme couche de recouvrement sur des mélanges de polymères A) en vue de la protection contre les rayons UV.